# Europäisches Patentamt
# European Patent Office
# Office européen des brevets

(11) Publication number: **0 146 394**
**B1**

(12) **EUROPEAN PATENT SPECIFICATION**

(45) Date of publication of patent specification: **28.09.88**

(21) Application number: **84308829.5**

(22) Date of filing: **17.12.84**

(51) Int. Cl.⁴: **B 32 B 15/08,** A 01 G 9/14, A 01 G 9/22

(54) Greenhouse provided with a demountable thermal insulating screen.

(30) Priority: 16.12.83 GB 8333649
07.02.84 GB 8403149

(43) Date of publication of application:
26.06.85 Bulletin 85/26

(45) Publication of the grant of the patent:
28.09.88 Bulletin 88/39

(84) Designated Contracting States:
AT BE CH DE FR GB IT LI LU NL SE

(56) References cited:
FR-A-2 395 832
GB-A- 821 149
GB-A-1 351 073
GB-A-2 080 732
US-A-4 147 291

(73) Proprietor: Perifleur (Holdings) Limited
Hangleton Lane Ferring
Worthing West Sussex BN12 6PP (GB)

(72) Inventor: Sparkes, Alec Graham
Hangleton Lane Ferring
Worthing West Sussex BN12 6PP (GB)

(74) Representative: Lamb, John Baxter et al
MARKS & CLERK 57/60 Lincoln's Inn Fields
London WC2A 3LS (GB)

Courier Press, Leamington Spa, England.

## Description

This invention is concerned with improvements in and relating to greenhouses provided with demountable thermal insulating screens.

It is known to provide a greenhouse with a screen extending generally horizontally across the house at a position intermediate the floor and roof of the house, for example at about the level of the eaves of the house, which screen has a reflective surface so as to minimise energy loss from the house and thereby conserve energy with the house and effect a fuel saving when the house is heated by means other than natural radiation. Such screens are generally arranged with the reflective surface upwards to reduce any emission from the house although in some cases the screen may be arranged with the reflective surface downwards. The screen is generally made of a flexible sheet material provided with a metallic reflective surface since it is desirable that the screen be readily demountable or interchangeable.

The present invention relates to a greenhouse provided with a demountable thermal insulating screen characterised in that the screen is formed of a sheet materal comprising a clear or translucent substrate formed of plastics material having laminated to one side thereof a layer of thermoplastics sheet material exhibiting, preferably on the surface thereof not in contact with the substrate, a partial metallisation, such that the overall solar radiation reflectivity of the screen is from 20 to 80%.

The substrate is suitably formed of cross-laminated layers of monoaxially stretched (e.g. extrusion stretched) polyolefin (e.g. polyethylene) and conveniently comprises at least two such layers. The total thickness of the substrate may, for example, be from 30 to 100 micrometers, preferably 40 to 80 micrometers.

The overall solar radiation reflectivity of the screen may be from 35 to 75%.

One surface of the (preferably) cross-laminated substrate is laminated to a sheet of thermoplastic material, preferably a polyester material, which preferably has a thickness of from 10 to 15 micrometers and such bonding or lamination may be effected by means of a suitable adhesive such as an epoxy adhesive, or by heat bonding in which case the sheet may be patterned for example by the use of heated knurled rollers. The sheet is provided with a partial metallisation, the metal being suitably aluminium. The side of the sheet laminated to the substrate may ulso be metallised. As will be appreciated, metals other than aluminium may be used to form the reflective surface and such metals may afford a coloured surface. If desired the metallized surface may be provided with a protective overlayer formed of a coating (such as a translucent clear or coloured varnish) or a layer of translucent (clear or coloured) plastics material. The sheet material of the invention is conveniently prepared by forming a reflective, discontinuous layer of metal on at least one surface of the thermoplastic sheet, suitably by vacuum deposition, and then bonding the metallized sheet to the cross-laminated substrate.

In the present invention, any clear layers may contain a U.V. inhibitor to stabilize the layer against the U.V. light. Suitable stabilizers are described, for example in British Patent Specification No. 2117779.

Further clear substrates may be coloured with a suitable dyestuff so as, for example, to act as filters to screen out certain wavelengths.

The layer of thermoplastic sheet material is only partially metallized, whereby to provide a sheet that has overall translucency combined with partial reflectivity.

The sheet material has been found to be very resistant to tear propagation should any accidental holing or rupture of the sheet cover occur. If the base layer is made of a continuous sheet or film of plastics material it has been found that accidental holing or rupture of the sheet readily leads to tear propagation and hence consequent diminution in the usefulness of the material. Further the resistance to tear propagation makes it possible to deliberately introduce perforations, for example by micropunching or slitting into the sheets and it has been found useful to do this in order to render the sheet permeable to water so that any water accumulating on the upper surface of the greenhouse screen may drain through it. It has been found that if water is allowed to accumulate on the upper surface of the screen it can lead to problems and even to rupture of the screen in extreme cases.

The resistance to tear propagation also makes it possible to join sheets of the material of invention together by a simple sewing technique, which simplifies the production and reduces the cost, of the large sizes of screens used in commercial greenhouses. (Alternatively the sheets may also be joined by heat sealing techniques).

A greenhous provided with a demountable thermal insulating screen according to the invention may, in addition to satisfying thermal barrier requirements, be used for day length control purposes, i.e. the screens are drawn across the greenhouse to prevent light reaching plants growing therein. In some instances it is most desirable to have as complete darkness in the greenhouse as possible.

The sheet material may also serve as a starting material for the manufacturer of thermal greenhouse screens of a woven or knitted construction.

Thus the sheet material is slit or converted into relatively narrow ribbons, e.g. having a width of 2 mm, and these ribbons are then woven or knitted or form a fabric which may be used as a glasshouse screen.

The substrate may comprise one or more layers of plastics material and examples of such materials include polyvinyl chloride, polyalkenes (such as polyethylene) alcohol polyesters. Such substrates may include U.V. stabilizers and dyestuffs as described above.

## Claims

1. A greenhouse provided with a demountable thermal insulating screen characterised in that the screen is formed of a sheet material comprising a clear or translucent substrate formed of plastics material having laminated to one side thereof a layer of thermoplastics sheet material exhibiting, preferably on the surface thereof not in contact with the substrate, a partial metallisation, such that the overall solar radiation reflectivity of the screen is from 20 to 80%.

2. A greenhouse as claimed in claim 1 in which the substrate is formed of at least two cross-laminated layers of monoaxially stretched polyolefin.

3. A greenhouse as claimed in claim 1 or claim 2 in which the overall solar radiation reflectivity of the screen is from 35 to 75%.

## Patentansprüche

1. Gewächshaus mit einem abnehmbaren wärmeisolierenden Schild, dadurch gekennzeichnet, daß der Schild aus einem schneibenartigen Material mit einem klaren oder durchscheinenden Substrat gebildet ist, das aus Kunststoffmaterial geformt wurde und auf dessen einer Seite eine Schicht aus thermoplastischem Scheibenmaterial laminiert wurde, welches vorzugsweise auf der nicht in Kontakt mit dem Substrat stehenden Oberfläche eine Teilmetallisierung erkennen läßt, derart, daß das Gesamtreflektionsvermögen für Sonnenstrahlung zwischen 20 bis 80% liegt.

2. Gewächshaus nach Anspruch 1, dadurch gekennzeichnet, daß das Substrat aus wenigstens zwei kreuzlaminierten Schichten aus monoaxial gerecktem Polyolefin besteht.

3. Gewächshaus nach Anspruch 1 oder 2, dadurch gekennzeichnet, daß die Solar-Gesamtstrahlungsreflektivität des Schildes zwischen 35 und 75% beträgt.

## Revendications

1. Une serre pourvue d'un écran isolant thermique démontable, caractérisée en ce que l'écran est formé en un matériau en feuilles comprenant un substrat clair ou translucide formé de matériau plastique comportant laminée sur l'un de ses côtés une couche de matériau thermoplastique en feuille présentant, de préférence sur sa face qui n'est pas en contact avec le substrat, une métallisation partielle telle que le pouvoir réfléchissant de l'écran à l'égard du rayonnement solaire global est de 20 à 80%.

2. Une serre selon la revendication 1, dans laquelle le substrat est formé d'au moins deux couches à stratification croisée de polyoléfine monoaxialement étirée.

3. Une serre selon la revendication 1 ou 2, dans laquelle le pouvoir réfléchissant de l'écran à l'égard du rayonnement solaire global est de 35 à 75%